# EUROPEAN PATENT SPECIFICATION

(11) **EP 3 442 235 B1**
(45) Date of publication and mention of the grant of the patent: **16.03.2022**
(21) Application number: 17185788.1
(22) Date of filing: 10.08.2017
(51) Int. Cl.: H04N 19/88, G06T 3/40, H04N 19/42

(54) **DEVICE AND METHOD FOR RAW IMAGE DATA COMPRESSION**
VORRICHTUNG UND VERFAHREN ZUR ROHBILDDATENKOMPRIMIERUNG
DISPOSITIF ET PROCÉDÉ DE COMPRESSION DE DONNÉES D'IMAGE BRUTES

(43) Date of publication of application: 13.02.2019
(73) Proprietor: Continental Automotive GmbH, 30165 Hannover (DE)
(72) Inventor: Chokkarapu, Anil, 506001 Hanamkonda, Warngal (IN); Asvatha Narayanan, Vishnu Vardhana, 560037 Kundanahalli (IN); Strigel, Elias, 88239 Wangen (DE); Kudana, Arun, 560073 Bangalore (IN); Gomathinayagam, Murugan, 560068 BTM Layout I Stage (IN)
(74) Representative: Continental Corporation

(56) References cited:
- WO-A1-2008/128112
- WO-A1-2015/055093
- US-A1- 2014 092 998
- US-A1- 2015 010 068

## Description

### FIELD OF THE INVENTION

The present invention relates to the field of Bayer image data for compression. Particularly, the present invention relates to a device or software implementation approach for Bayer raw image data compression using existing hardware chips which use standard compression techniques and a corresponding method.

### BACKGROUND OF THE INVENTION

US 2015/010068 A1 describes methods and devices for pre-encoding and post-decoding high bit-depth content in video encoder and decoder. After having split each of the samples of the picture into at least two sub-samples, each of the at least two sub-samples being of a predetermined bit-depth, the bit-depth of the samples being higher than the bit-depth of each of the at least two sub-samples, the at least two sub-samples of each of the samples are stored into at least two different components of at least one picture.

WO 2015/055093 A1 describes a data processing apparatus which has a mapper, a plurality of compressors, and an output interface. The therein described mapper receives pixel data of a plurality of pixels of a picture and splits the pixel data of the pixels of the picture into a plurality of pixel data groups.

The camera captures data in form of image or video data in RAW Bayer format, GBRG or GRBG or BGGR or RGGB. The captured image or video data has redundancy with regard to its information content. With elimination of redundancy, the storage space for data retention as well bandwidth requirements for data transmission both reduces.

The standard compression techniques provide solutions only for certain color formats such as RGB or YUV formats, for example YUV420, YUV422, YUV444, and not for raw data formats like Bayer-pattern images.

Even the chip vendor's hardware units mainly support YUV420 chroma sampling format and other data formats are generally not supported by chip-based data compression systems.

Camera sensor acquisition unit continuously capture scenes in terms of image or video data in raw format in either GRBG or RGGB with any of the bit depth available 8, 10, 12 and 14.

None of the chip manufactures provide encoder/decoder support of 12 bit-depth-data (maximum is 10-bit-support in limited use cases, but 8-bit is the most common format supported) captured by camera.

The problem faced using existing hardware's for encoding and decoding feed from our camera can broadly be split into two as stated below,

Insufficient pixel-bit depth (higher bit depth above 8) support by these hardware; and

Lack of support of required Chroma sampling formats in current existing hardware systems.

### SUMMARY OF THE INVENTION

There may be a need to improve pixel-bit depth support above 8-bit and support of chroma sampling formats for raw image data compression for a vehicle using the existing hardware chips.

These needs are met by the subject-matter of the independent claims. Further exemplary embodiments are evident from the dependent claims and the following description.

An aspect of the present invention relates to device or software implementation approach for raw Bayer image data compression for a vehicle.

The device or software implementation approach comprises a data rearranging module, which is configured to rearrange a 12-bit depth pattern input data captured from camera sensor into a 12-bit depth pattern rearranged data comprising
i) at least one Y-channel containing collated green, red and blue components of the 12-bit depth pattern input data and,
ii) at least one U-channel and at least one V-channel containing at least one blank image filled with zeros;
iii) wherein a resolution of the at least one Y-channel corresponds to a resolution of the 12-bit depth pattern input data.

The device further comprises a data splitting module, which is configured to split the 12-bit depth pattern rearranged data into a 8-bit depth pattern least significant bits, LSB, data and a 8-bit depth pattern most significant bits, MSB, data, wherein the 8-bit depth pattern LSB data comprises lowest 8-bit of the 12-bit depth pattern rearranged data, wherein the 8-bit depth pattern MSB data comprises highest 4-bit of the 12-bit depth pattern rearranged data and 4-bit of appended zeros.

According to the invention, the 12-bit depth pattern rearranged data, wherein the 8-bit depth pattern of LSB data comprises lower 8-bits of the 12-bit depth pattern rearranged data, wherein the 8-bit depth pattern of MSB data comprises higher 4-bits of the 12-bit depth pattern rearranged data in lower 4-bits of MSB data and higher 4-bits of MSB data is filled with zeros.

The device or software implementation approach for raw image data compression for a vehicle provides a unique process solution in addressing problems or drawbacks associated with hardware units supporting video compression manufactured by chip vendors.

The device or software implementation approach for raw image data compression for a vehicle seeks an idea to utilize available hardware units in the market without any further focusing on manufacturing new hardware units to support higher bit depth as well for different chroma sampling format in compressing data.

A further, second aspect of the present invention relates to a method for raw Bayer image data compression for a vehicle, the method comprising the following steps of:
Rearranging a 12-bit depth pattern input data in form of an image in raw Bayer image format into a 12-bit depth pattern rearranged data by means of a data rearranging module, the 12-bit depth pattern rearranged data comprising
i) at least one Y-channel containing collated green, red and blue components of the 12-bit depth pattern input data and,
ii) at least one U-channel and at least one V-channel both containing at least one blank image filled with zeros;
wherein a resolution of the at least one Y-channel corresponds to a resolution of the 12-bit depth pattern input data.

As a further, second step, the method comprises: Splitting the 12-bit depth pattern rearranged data into a 8-bit depth pattern least significant bits, LSB, data and a 8-bit depth pattern most significant bits, MSB, data by means of a data splitting module.

Thereby, we split 12-bit depth pattern rearranged data as, 8-bit depth pattern LSB data comprises lowest 8-bit of the 12-bit depth pattern rearranged data, wherein the 8-bit depth pattern MSB data comprises higher 4-bits of the 12-bit depth pattern rearranged data in lower 4-bits of MSB data and higher 4-bits is filled with zeros.

An aspect which is not part of the invention relates to a 12-bit depth pattern output data for raw image data compression for a vehicle, the 12-bit depth pattern output data after coding process comprising a 8-bit depth pattern LSB data and a 8-bit depth pattern MSB data, for instance wherein the 8-bit depth pattern LSB data comprises of lower 8-bits of a 12-bit depth pattern rearranged data, wherein the 8-bit depth pattern MSB data comprises of higher 4-bits of the 12-bit depth pattern of rearranged data in lower 4-bits of MSB data and higher 4-bits of MSB data is filled with zeros, wherein the 12-bit depth pattern rearranged data comprising
i) at least one Y-channel containing collated green, red and blue components of 12-bit depth pattern input data and,
ii) at least one U-channel and at least one V-channel both containing at least one blank image filled with zeros; wherein a resolution of the at least one Y-channel corresponds to a resolution of the 12-bit depth pattern input data.

In the aspect which is not part of the invention, the data splitting module can also be configured as, a 12-bit depth pattern output data for raw image data compression for a vehicle, comprising 8-bit depth pattern of LSB data comprises of lower 4 or 6 bits and 8-bit depth pattern of MSB data comprises of higher 8 or 6 bits of 12-bit depth of rearranged image data. Depending on the camera exposure/ illumination settings, these splits can be decided.

According to an exemplary embodiment of the present invention, the data rearranging module and the data splitting module are configured to maintain temporal correlations among pixels.

According to an exemplary embodiment of the present invention, the data rearranging module and the data splitting module are configured to maintain spatial correlations among pixels of the same image.

According to an exemplary embodiment of the present invention, the data splitting module is also configured to merge the 8-bit depth pattern LSB data and the 8-bit depth pattern MSB data into a 12-bit depth pattern output data after the coding process for an instance.

According to an exemplary embodiment of the present invention, the data splitting module is configured to provide as the 12-bit depth pattern output data a YUV420 format after the coding process.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

The methods, systems, and devices described herein may be implemented as software in a Digital Signal Processor, DSP, in Graphical Processing Unit, GPU, in a micro-controller or in any other side-processor or as a hardware circuit within an application specific integrated circuit, ASIC, CPLD or FPGA.

The present invention can be implemented in digital electronic circuitry or in computer hardware, firmware, software, or in combinations thereof, for instance in available hardware of conventional medical imaging devices or in broadcasting and/or multimedia devices or in new hardware dedicated for processing the methods described herein.

### BRIEF DESCRIPTION OF THE DRAWINGS

A more complete appreciation of the invention and the attendant advantages thereof will be clearly understood by reference to the following schematic drawings, which are not to scale, wherein:
- Fig. 1: shows a schematic flowchart diagram for a method for raw image data compression for a vehicle according to an exemplary embodiment of the present invention;
- Fig. 2: shows a schematic diagram for a device or software implementation approach for raw image data compression for a vehicle according to an exemplary embodiment of the present invention;
- Fig. 3: shows a schematic diagram of a Bayer-Pattern of an image captured by a camera sensor according to an exemplary embodiment of the present invention;
- Fig. 4: shows a schematic diagram of an arrangement in YUV420 format of a Bayer-Pattern image according to an exemplary embodiment of the present invention;
- Fig. 5: shows an example in terms of a table 1 providing a Bayer image and YUV channels resolution according to an exemplary embodiment of the present invention;
- Fig. 6: shows a schematic diagram of a splitting YUV420 12-bit depth into MSB and LSB according to an exemplary embodiment of the present invention;
- Fig. 7: shows an example in terms of a table 1 providing a Bayer image and YUV channels resolution after data splitting module according to an exemplary embodiment of the present invention;
- Fig. 8: shows a schematic diagram of results of percentage of reduction in data in urban scenario according to an exemplary embodiment of the present invention; and
- Fig. 9: shows a schematic diagram of results of percentage of reduction in data in highway scenario according to an exemplary embodiment of the present invention.

### DETAILED DESCRIPTION OF EMBODIMENTS

The illustration in the drawings is purely schematic and does not intend to provide scaling relations or size information. In different drawings, similar or identical elements are provided with the same reference numerals.

Generally, identical parts, units, entities or steps are provided with the same reference symbols in the description.

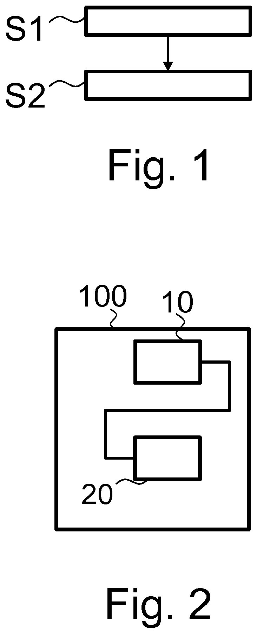

Fig. 1 shows a schematic flowchart diagram for a method for raw image data compression for a vehicle according to an exemplary embodiment of the present invention.

The method for raw image data compression for a vehicle comprises the following steps:
As a first step of the method, rearranging S1 a 12-bit depth pattern input data into a 12-bit depth pattern rearranged data in YUV420 chroma sampling format by means of a data rearranging module 10 is performed.

The 12-bit depth pattern rearranged data comprises:
i) at least one Y-channel containing collated green, red and blue components of the 12-bit depth pattern input data; and
ii) at least one U-channel and at least one V-channel both containing at least one blank image filled with zeros;
wherein a resolution of the at least one Y-channel corresponds to a resolution of the 12-bit depth pattern input data.

As a second step of the method, splitting S2 the 12-bit depth pattern rearranged data into an 8-bit depth pattern of least significant bits, LSB, data and an 8-bit depth pattern most significant bits, MSB, data is performed by means of a data splitting module 20.

The 8-bit depth pattern LSB data comprises lower 8-bits of the 12-bit depth pattern rearranged data, wherein the 8-bit depth pattern MSB data comprises higher 4-bits of the 12-bit depth pattern rearranged data in lower 4-bits of MSB and higher 4-bits of MSB data is filled with zeros.

The present invention may for instance be applied in video broadcasting, V2X communication, e.g. vehicle to anything communication, or for infotainment application of a vehicle.

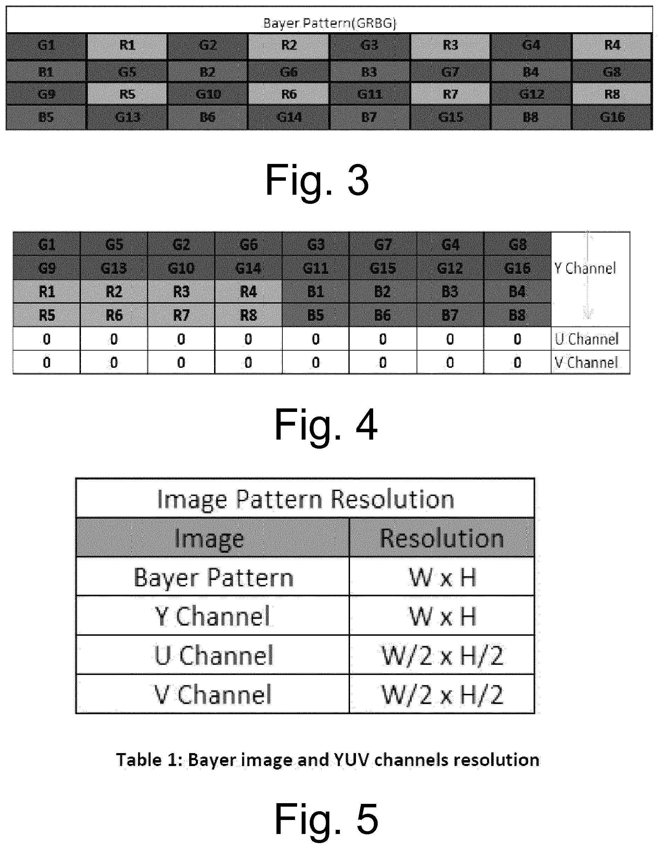

The present invention provides that a camera captures data in Bayer pattern with GRBG pattern of 12-bit depth as shown in Fig. 3.

In order to compress data using standard CODEC's, for instance HEVC/H.264 etc., the encoder and decoder hence has to expects input data either in any of the YUV chroma sampling formats such as 4:2:0 or 4:2:2 or 4:4:4 with 8 or 10 or 12 bit depth.

However, most of the hardware chips are available in market are configured with codec's supporting chroma sampling format of YUV420 with 8-bit depth. Thus, the challenge is to rearrange the captured Bayer pattern data into YUV420 format with 8-bit depth.

The present invention addresses this challenge with unique and smart way of data rearrangement procedure to do coding process using standard coding technique with hardware chip, as described in following steps,
1) Rearranging the GRBG, 12-bit depth pattern data in the manner of YUV420 format (as shown in Fig. 4) in such a way that
   (a) Y Channel contains all collated green, red and blue components of 12-bit depth data and,
   (b) U & V Channel contains blank image filled with zeros as shown in Fig. 4.
   (c) The resolution of each and every channel is represented in Table 1 of Fig. 5;
2) Subsequently splitting YUV420 of the 12- bit depth data into two components.

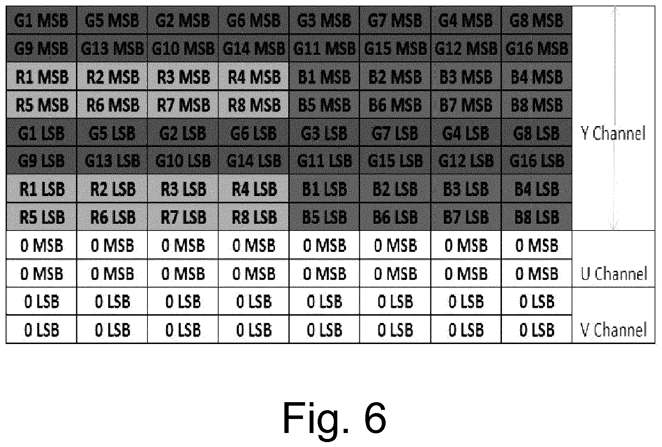

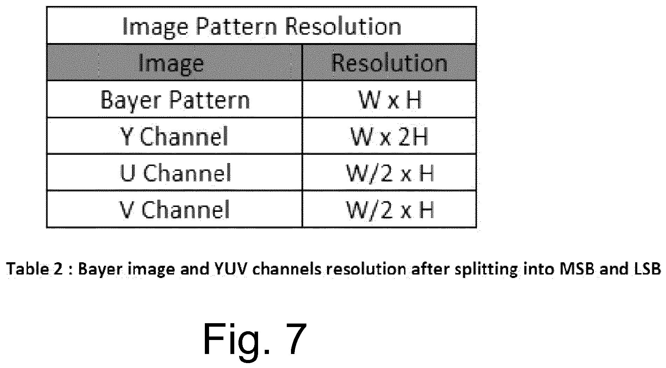

One such splitting is as the following:
(a) One with 8 bits as Least Significant Bits (LSB) of lower 8-bits of rearranged 12-bit depth data and
(b) Another upper 4 bits of 12-bit rearranged data in lower 4-bits of MSB data and higher 4-bits are filled with zeros as Most Significant Bits, MSB, as shown in Fig. 6.
(c) In this case the resolution of each and every channel is represented in Table 2 of Fig. 7.

Fig. 2 shows a schematic diagram for a device for raw image data compression for a vehicle according to an exemplary embodiment of the present invention.

A device 100 for raw image data compression for a vehicle, the device 100 comprises a data rearranging module 10 and a data splitting module 20.

The data rearranging module 10 is configured to rearrange a 12-bit depth pattern input data into a 12-bit depth pattern rearranged data, the 12-bit depth pattern rearranged data comprising:
i) at least one Y-channel containing collated green, red and blue components of the 12-bit depth pattern input data and,
ii) at least one U-channel and at least one V-channel containing at least one blank image filled with zeros;
wherein a resolution of the at least one Y-channel corresponds to a resolution of the 12-bit depth pattern input data.

The data splitting module 20 is configured to split the 12-bit depth pattern rearranged data into an 8-bit depth pattern least significant bits, LSB, data and an 8-bit depth pattern most significant bits, MSB, data.

The 8-bit depth pattern LSB data comprises lower 8-bits of the 12-bit depth pattern rearranged data, wherein the 8-bit depth pattern MSB data comprises higher 4-bits of the 12-bit depth pattern rearranged data in lower 4-bits of MSB data and higher 4-bits of MSB data is filled with zeros.

Fig. 3 shows a schematic diagram of a Bayer-pattern of an image captured by a camera sensor according to an exemplary embodiment of the present invention.

A camera records images or video data in Bayer pattern with GRBG pattern of 12-bit depth as shown in Fig. 3.

Fig. 4 shows a schematic diagram of an arrangement in YUV420 format of a Bayer-pattern image according to an exemplary embodiment of the present invention.

Fig. 5 shows an example in terms of a Table 1 providing a Bayer image and YUV channels resolution according to an exemplary embodiment of the present invention.

Fig. 6 shows a schematic diagram of a splitting YUV420 12-bit depth into MSB and LSB of 8-bits each according to an exemplary embodiment of the present invention.

Fig. 7 shows a schematic diagram of a Bayer image and YUV channels resolution after splitting into MSB and LSB according to an exemplary embodiment of the present invention.

This large YUV image, for resolution instance comprising 3 channels as shown in table 2, represent the input data to the hardware YUV420, 8 bit-depth to encoder.

Support for 4:2:0 8-bit output formats: NV12, 1420, YV12.

With the above rearrangement of the captured data, the spatial and temporal correlations among pixels of the same image are preserved.

The present invention advantageously improves the compression efficiency for any camera feed using hardware's available with codec chips in market.

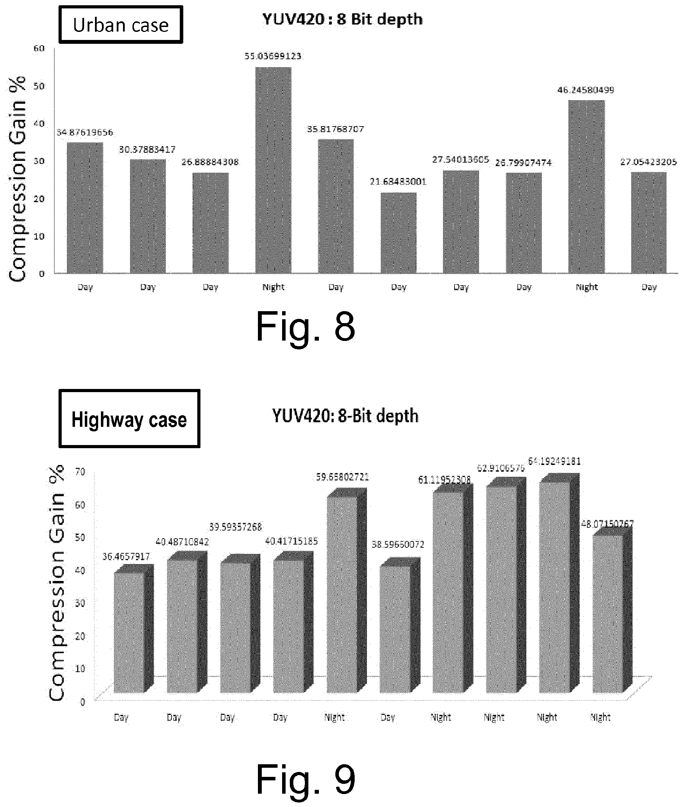

According to an exemplary embodiment of the present invention, selected/configured HEVC video codec standard with lossless mode to evaluate this scheme of data rearrangement, whose results are shown in Fig. 8 and 9.

Fig. 8 shows a schematic diagram of results of percentage of reduction in data in urban scenario according to an exemplary embodiment of the present invention.

For the results as shown, lossless mode of HEVC codec were considered and set of video sequences captured were also considered, in urban environment and highways, both day & night-time, high textured images, and also flat surfaces.

Further, static vehicles on roads as well dynamic objects like pedestrians and vehicles were observed. Each sequence considered in this analysis has 100 to 400 frames captured at 30 fps.

The results as shown in Fig. 8 and 9 achieved 100% lossless data compression with the lossless modes settings in HEVC standard codec.

According to an exemplary embodiment of the present invention, the percentage reduction in size is achieved as follows:
Average of 35% to 45 % for urban scenarios in day and night-time as shown in Fig. 8.

Fig. 9 shows a schematic diagram of results of percentage of reduction in data in highway scenario according to an exemplary embodiment of the present invention.

According to an exemplary embodiment of the present invention, the percentage reduction in size is achieved as follows:
Average of 50% to 55% for highway scenarios in day and night-time as shown in Fig. 9.

It has to be noted that embodiments of the present invention are described with reference to different subject-matters.

In particular, some embodiments are described with reference to method type claims, whereas other embodiments are described with reference to the device type claims.

However, a person skilled in the art will gather from the above and the foregoing description that, unless otherwise notified, in addition to any combination of features belonging to one type of the subject-matter also any combination between features relating to different subject-matters is considered to be disclosed with this application.

However, all features can be combined providing synergetic effects that are more than the simple summation of these features.

While the invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims.

The mere fact that certain measures are recited in mutually different dependent claims does not indicate that a combination of these measures cannot be used to advantage. Any reference signs in the claims should not be considered as limiting the scope.

## Claims

1. A device (100) for raw image data compression for a vehicle, **characterized by** the device (100) comprising:
- a data rearranging module (10), which is configured to rearrange image data captured from a camera in form of a raw Bayer format of 12-bit depth pattern input data into YUV420 12-bit depth pattern rearranged data, the 12-bit depth pattern rearranged data comprising i) at least one Y-channel containing collated green, red and blue components of the 12-bit depth pattern input data;ii) at least one U-channel and at least one V-channel containing at least one blank image filled with zeros; and wherein a resolution of the at least one Y-channel corresponds to a resolution of the 12-bit depth pattern input data,
- a data splitting module (20), which is configured to split the 12-bit depth pattern rearranged data received from the data rearranging module (10) into an YUV420 format with 8-bit depth pattern of least significant bits, LSB, data and an 8-bit depth pattern of most significant bits, MSB, data,
wherein the 8-bit depth pattern of the LSB data comprises the lower 8-bits of the 12-bit depth pattern rearranged data, wherein the 8-bit depth pattern of the MSB data comprises the higher 4-bits of the 12-bit depth pattern rearranged data as the lower 4-bits of the MSB data and the higher 4-bits of the MSB data are filled with zeros,
wherein the 8-bit data are stored in the Y-channel of an 8-bit image where the YUV420 sampling format is maintained, and
the Y, U and V components have doubled vertical resolution; and
- wherein the device (100) is configured to compress the YUV420 formatted 8-bit data obtained from the data splitting module (20) using standard codecs.

2. The device (100) according to claim 1, wherein the data rearranging module (10) and the data splitting module (20) are configured to maintain temporal correlations between frames of subsequently recorded images.

3. The device (100) according to claim 1 or 2, wherein the data rearranging module (10) and the data splitting module (20) are configured to maintain spatial correlations among pixels of the same image.

4. The device (100) according to any one of the preceding claims, wherein the data splitting module (20) is configured to merge the 8-bit depth pattern LSB data and the 8-bit depth pattern MSB data into 12-bit depth pattern output data after the coding process with lossless compression.

5. The device (100) according to claim 4, wherein the data splitting module (20) is configured to provide as the 12-bit depth pattern output data, a YUV420 format after coding process.

6. The device (100) according to any one of the preceding claims, wherein the device is configured to use an HEVC video codec with lossless mode or lossy mode based on use case.

7. A method for raw image data compression for a vehicle, the method **characterized by** comprising the following steps of:
- Rearranging (S1) image data captured from a camera in form of a raw Bayer format of 12-bit depth pattern input data into YUV420 12-bit depth pattern rearranged data by means of a data rearranging module (10), the 12-bit depth pattern rearranged data comprising
i) at least one Y-channel containing collated green, red and blue components of the 12-bit depth pattern input data and,
ii) at least one U-channel and at least one V-channel both containing at least one blank image filled with zeros, wherein a resolution of the at least one Y-channel corresponds to a resolution of the 12-bit depth pattern input raw image data,
- Splitting (S2) the 12-bit depth pattern rearranged data received from the data rearranging module (10) into an YUV420 format with 8-bit depth pattern of least significant bits, LSB, data and an 8-bit depth pattern of most significant bits, MSB, data by means of a data splitting module (20), wherein the 8-bit depth pattern of the LSB data comprises the lower 8-bits of the 12-bit depth pattern rearranged data, wherein the 8-bit depth pattern of the MSB data comprises the higher 4-bits of the 12-bit depth pattern rearranged data as the lower 4-bits of the MSB data and the higher 4-bits of the MSB data are filled with zeros,
wherein the 8-bit data are stored in the Y-channel of an 8-bit image where the YUV420 sampling format is maintained, and
the Y, U and V components have doubled vertical resolution, and
- compressing the YUV420 formatted 8-bit data obtained from the data splitting module (20) using standard codecs.

8. The method according to claim 7,
wherein the method further comprises the step of merging the 8-bit depth pattern LSB data and the 8-bit depth pattern MSB data into 12-bit depth pattern output data after the coding process.

## Patentansprüche

1. Vorrichtung (100) zur Bildrohdatenkomprimierung für ein Fahrzeug, **dadurch gekennzeichnet, dass** die Vorrichtung (100) Folgendes umfasst:
- ein Datenneuanordnungsmodul (10), das ausgebildet ist, Bilddaten, die von einer Kamera in Form eines Bayer-Rohformats von Eingangsdaten mit 12 Bit-Tiefenmustern aufgenommen werden, in neu angeordnete YUV420-Daten mit 12 Bit-Tiefenmuster neu anzuordnen, wobei die neu angeordneten Daten mit 12 Bit-Tiefenmuster i) mindestens einen Y-Kanal, der zusammengestellte Grün-, Rot- und Blaukomponenten der Eingangsdaten mit 12 Bit-Tiefenmuster enthält; und ii) mindestens einen U-Kanal und mindestens einen V-Kanal, die mindestens ein Austastbild, das mit Nullen gefüllt ist, enthalten; aufweisen und wobei eine Auflösung des mindestens einen Y-Kanals einer Auflösung der Eingangsdaten mit 12 Bit-Tiefenmuster entspricht,
- ein Datenteilungsmodul (20), das ausgebildet ist, die neu angeordneten Daten mit 12 Bit-Tiefenmuster, die vom Datenneuanordnungsmodul (10) empfangen wurden, in ein YUV420-Format mit einem 8 Bit-Tiefenmuster von Daten niedrigstwertiger Bits, LSB-Daten, und einem 8 Bit-Tiefenmuster von Daten höchstwertiger Bits, MSB-Daten, zu teilen, wobei
das 8 Bit-Tiefenmuster der LSB-Daten die unteren 8 Bit der neu angeordneten Daten mit 12 Bit-Tiefenmuster aufweist,
das 8 Bit-Tiefenmuster der MSB-Daten die oberen 4 Bit der neu angeordneten Daten mit 12 Bit-Tiefenmuster als die unteren 4 Bit der MSB-Daten aufweist und die oberen 4 Bit der MSB-Daten mit Nullen gefüllt sind,
die 8 Bit-Daten im Y-Kanal eines 8 Bit-Bilds gespeichert sind, wobei das YUV420-Abtastformat erhalten bleibt, und die Y-, U- und V-Komponenten eine verdoppelte vertikale Auflösung besitzen; und wobei
- die Vorrichtung (100) ausgebildet ist, die YUV420-formatierten 8 Bit-Daten, die vom Datenteilungsmodul (20) erhalten werden, unter Verwendung von Norm-Codecs zu komprimieren.

2. Vorrichtung (100) nach Anspruch 1, wobei
das Datenneuanordnungsmodul (10) und das Datenteilungsmodul (20) ausgebildet sind, zeitliche Korrelationen zwischen Rahmen nacheinander aufgezeichneter Bilder zu erhalten.

3. Vorrichtung (100) nach Anspruch 1 oder 2, wobei
das Datenneuanordnungsmodul (10) und das Datenteilungsmodul (20) ausgebildet sind, räumliche Korrelationen zwischen Pixeln desselben Bilds zu erhalten.

4. Vorrichtung (100) nach einem der vorhergehenden Ansprüche, wobei
das Datenteilungsmodul (20) ausgebildet ist, nach dem Codierungsprozess mit verlustloser Komprimierung die LSB-Daten mit 8 Bit-Tiefenmuster und die MSB-Daten mit 8 Bit-Tiefenmuster in Ausgangsdaten mit 12 Bit-Tiefenmuster zusammenzuführen.

5. Vorrichtung (100) nach Anspruch 4, wobei
das Datenteilungsmodul (20) ausgebildet ist, nach einem Codierungsprozess ein YUV420-Format als die Ausgangsdaten mit 12 Bit-Tiefenmuster bereitzustellen.

6. Vorrichtung (100) nach einem der vorhergehenden Ansprüche, wobei
die Vorrichtung ausgebildet ist, einen HEVC-Video-Codec auf der Grundlage des Anwendungsfalls mit verlustlosem Modus oder verlustbehaftetem Modus zu verwenden.

7. Verfahren zur Bildrohdatenkomprimierung für ein Fahrzeug, wobei das Verfahren **gekennzeichnet ist durch**:
- Neuanordnen (S1) von Bilddaten, die von einer Kamera in Form eines Bayer-Rohformats von Eingangsdaten mit 12 Bit-Tiefenmustern aufgenommen werden, in neu angeordnete YUV420-Daten mit 12 Bit-Tiefenmuster mittels eines Datenneuanordnungsmoduls (10), wobei die neu angeordneten Daten mit 12 Bit-Tiefenmuster Folgendes aufweisen:
i) mindestens einen Y-Kanal, der zusammengestellte Grün-, Rot- und Blaukomponenten der Eingangsdaten mit 12 Bit-Tiefenmuster enthält, und
ii)mindestens einen U-Kanal und mindestens einen V-Kanal, die beide mindestens ein Austastbild, das mit Nullen gefüllt ist, enthalten, wobei eine Auflösung des mindestens einen Y-Kanals einer Auflösung der Eingangsbildrohdaten mit 12 Bit-Tiefenmuster entspricht,
- Teilen (S2) der neu angeordneten Daten mit 12 Bit-Tiefenmuster, die vom Datenneuanordnungsmodul (10) empfangen wurden, mittels eines Datenteilungsmoduls (20) in ein YUV420-Format mit einem 8 Bit-Tiefenmuster von Daten niedrigstwertiger Bits, LSB-Daten, und einem 8 Bit-Tiefenmuster von Daten höchstwertiger Bits, MSB-Daten, wobei
das 8 Bit-Tiefenmuster der LSB-Daten die unteren 8 Bit der neu angeordneten Daten mit 12 Bit-Tiefenmuster aufweist,
das 8 Bit-Tiefenmuster der MSB-Daten die oberen 4 Bit der neu angeordneten Daten mit 12 Bit-Tiefenmuster als die unteren 4 Bit der MSB-Daten aufweist und die oberen 4 Bit der MSB-Daten mit Nullen gefüllt sind,
die 8 Bit-Daten im Y-Kanal eines 8 Bit-Bilds gespeichert sind, wobei das YUV420-Abtastformat erhalten bleibt, und die Y-, U- und V-Komponenten eine verdoppelte vertikale Auflösung besitzen, und
- Komprimieren der YUV420-formatierten 8 Bit-Daten, die vom Datenteilungsmodul (20) erhalten werden, unter Verwendung von Norm-Codecs.

8. Verfahren nach Anspruch 7, wobei
das Verfahren ferner den Schritt des Zusammenführens der LSB-Daten mit 8 Bit-Tiefenmuster und der MSB-Daten mit 8 Bit-Tiefenmuster in Ausgangsdaten mit 12 Bit-Tiefenmuster nach dem Codierungsprozess aufweist.

## Revendications

1. Dispositif (100) pour la compression de données d'image brutes pour un véhicule, **caractérisé en ce que** le dispositif (100) comprend :
- un module de réarrangement de données (10), qui est configuré pour réarranger des données d'image capturées à partir d'une caméra sous la forme d'un format Bayer brut de données d'entrée de motif de profondeur de 12 bits en données réarrangées de motif de profondeur de 12 bits YUV420, les données réarrangées de motif de profondeur de 12 bits comprenant i) au moins un canal Y contenant des composantes verte, rouge et bleue collationnées des données d'entrée de motif de profondeur de 12 bits ; ii) au moins un canal U et au moins un canal V contenant au moins une image vide remplie de zéros ; et où une résolution de l'au moins un canal Y correspond à une résolution des données d'entrée de motif de profondeur de 12 bits,
- un module de division de données (20), qui est configuré pour diviser les données réarrangées de motif de profondeur de 12 bits reçues du module de réarrangement de données (10) en un format YUV420 avec un motif de profondeur de 8 bits des données de bits de poids faible, LSB, et un motif de profondeur de 8 bits des données de bits de poids fort, MSB,
où le motif de profondeur de 8 bits des données LSB comprend les 8 bits inférieurs des données réarrangées de motif de profondeur de 12 bits,
où le motif de profondeur de 8 bits des données MSB comprend les 4 bits supérieurs des données réarrangées de motif de profondeur de 12 bits, les 4 bits inférieurs des données MSB et les 4 bits supérieurs des données MSB étant remplis de zéros,
où les données de 8 bits sont stockées dans le canal Y d'une image de 8 bits où le format d'échantillonnage YUV420 est maintenu, et les composantes Y, U et V ont une résolution verticale doublée ; et
- où le dispositif (100) est configuré pour compresser les données de 8 bits formatées YUV420 obtenues à partir du module de division de données (20) en utilisant des codecs standard.

2. Dispositif (100) selon la revendication 1,
dans lequel le module de réarrangement de données (10) et le module de division de données (20) sont configurés pour maintenir des corrélations temporelles entre des trames d'images enregistrées ultérieurement.

3. Dispositif (100) selon la revendication 1 ou la revendication 2,
dans lequel le module de réarrangement de données (10) et le module de division de données (20) sont configurés pour maintenir des corrélations spatiales entre des pixels de la même image.

4. Dispositif (100) selon l'une quelconque des revendications précédentes,
dans lequel le module de division de données (20) est configuré pour fusionner les données LSB de motif de profondeur de 8 bits et les données MSB de motif de profondeur de 8 bits en données de sortie de motif de profondeur de 12 bits après le processus de codage avec compression sans perte.

5. Dispositif (100) selon la revendication 4,
dans lequel le module de division de données (20) est configuré pour fournir comme données de sortie de motif de profondeur de 12 bits, un format YUV420 après le processus de codage.

6. Dispositif (100) selon l'une quelconque des revendications précédentes,
dans lequel le dispositif est configuré pour utiliser un codec vidéo HEVC avec un mode sans perte ou un mode avec perte en fonction du cas d'utilisation.

7. Procédé de compression de données d'image brutes pour un véhicule, le procédé étant **caractérisé en ce qu'**il comprend les étapes suivantes :
- réarranger (S1) les données d'image capturées à partir d'une caméra sous la forme d'un format Bayer brut de données d'entrée de motif de profondeur de 12 bits en en données réarrangées de motif de profondeur de 12 bits YUV420 au moyen d'un module de réarrangement (10), les données réarrangées de motif de profondeur de 12 bits comprenant :
i) au moins un canal Y contenant des composantes verte, rouge et bleue collationnées des données d'entrée de motif de profondeur de 12 bits ; et
ii) au moins un canal U et au moins un canal V contenant tous deux au moins une image vide remplie de zéros, où une résolution de l'au moins un canal Y correspond à une résolution des données d'image brutes d'entrée de motif de profondeur de 12 bits,
- diviser (S2) les données réarrangées de motif de profondeur de 12 bits reçues du module de réarrangement de données (10) en un format YUV420 avec un motif de profondeur de 8 bits des données de bits de poids faible, LSB, et un motif de profondeur de 8 bits des données de bits de poids fort, MSB, au moyen d'un module de division de données (20),
où le motif de profondeur de 8 bits des données LSB comprend les 8 bits inférieurs des données réarrangées de motif de profondeur de 12 bits,
où le motif de profondeur de 8 bits des données MSB comprend les 4 bits supérieurs des données réarrangées de motif de profondeur de 12 bits, les 4 bits inférieurs des données MSB et les 4 bits supérieurs des données MSB étant remplis de zéros,
où les données de 8 bits sont stockées dans le canal Y d'une image de 8 bits où le format d'échantillonnage YUV420 est maintenu, et les composantes Y, U et V ont une résolution verticale doublée, et
- compresser les données de 8 bits formatées YUV420 obtenues à partir du module de division de données (20) en utilisant des codecs standard.

8. Procédé selon la revendication 7,
dans lequel le procédé comprend en outre l'étape comprenant de fusionner les données LSB de motif de profondeur de 8 bits et les données MSB de motif de profondeur de 8 bits en données de sortie de motif de profondeur de 12 bits après le processus de codage.
